# EUROPÄISCHE PATENTSCHRIFT

(11) **EP 3 878 616 B1**
(45) Veröffentlichungstag und Bekanntmachung des Hinweises auf die Patenterteilung: **16.11.2022**
(21) Anmeldenummer: 20161830.3
(22) Anmeldetag: 09.03.2020
(51) Int. Cl.: B27B 5/22

(54) **SÄGEVORRICHTUNG**
SAWING DEVICE
DISPOSITIF DE SCIAGE

(43) Veröffentlichungstag der Anmeldung: 15.09.2021
(73) Patentinhaber: Angst Maschinenbau GmbH, 9453 Eichberg (CH)
(72) Erfinder: ANGST, Christoph, CH-9453 Eichberg (CH)
(74) Vertreter: Kaminski Harmann

(56) Entgegenhaltungen:
- EP-A1- 1 992 461
- DE-C- 911 946
- FR-A- 985 510

## Beschreibung

Die vorliegende Erfindung betrifft eine Sägevorrichtung gemäß dem Oberbegriff des Anspruchs 1, zum Sägen eines Sägeguts, das Fleisch und/oder Knochen tierischen Ursprungs aufweist und insbesondere gefroren ist.

Aus dem Stand der Technik sind Sägevorrichtungen zum Sägen gattungsgemässen Sägeguts bekannt, die im Wesentlichen einer Bandsäge gleichen. Gefrorenes Schweinefleisch, Kalbfleisch, Rindfleisch, jeweils mit oder ohne Knochen, und Knochen an sich werden im Stand der Technik üblicherweise von Hand durch das angetriebene Sägeband geführt. Diese Arbeiten sind nicht nur gefährlich, sie können auch aufgrund der Kälte des Sägeguts sehr unangenehm sein und sind aufwandsintensiv und fehleranfällig bzw. ungenau.

Es ist daher eine Aufgabe der Erfindung, eine verbesserte Sägevorrichtung bereitzustellen. Die Verbesserungen betreffen die Sicherheit, den Komfort, die Effizienz sowie die Qualität des Sägevorgangs.

Eine Sägevorrichtung gemäß dem Oberbegriff des Anspruchs 1 ist aus Dokument DE 911 946 C bekannt. Die vorliegende Erfindung betrifft eine Sägevorrichtung zum Sägen eines Sägeguts, das Fleisch und/oder Knochen tierischen Ursprungs aufweist und insbesondere gefroren ist, aufweisend ein Gehäuse, ein Sägeelement und einen Motor zum Antreiben des Sägeelements, wobei die Sägevorrichtung weiterhin aufweist: mindestens ein Kreissägeblatt als Sägeelement, eine Wippe, die schwenkbar um eine Wippachse in dem Gehäuse gelagert ist und die ein Einlegefach zum Einlegen des Sägeguts und einen Deckel aufweist, der zum Öffnen und Verschliessen des Einlegefachs schwenkbar um eine Deckelachse an der Wippe gelagert ist, wobei das Einlegefach mindestens einen Schlitz aufweist, der so angeordnet und ausgebildet, dass das Kreissägeblatt zum Sägen des Sägeguts mittels der Schwenkbarkeit der Wippe durch den Schlitz in das Einlegefach eintauchbar ist, mindestens eine Kulissenführung, die durch ein erstes Element am Deckel und ein zweites Element am Gehäuse gebildet wird, wobei das erste oder zweite Element als eine Kulissenbahn und das respektive andere Element als ein Kulissenstein ausgeführt ist, wobei die Kulissenbahn: (a) einen Blockierabschnitt und einen Sägeabschnitt aufweist, (b) in dem Blockierabschnitt derart ausgebildet ist, dass durch ein Vorliegen des Kulissensteins in dem Blockierabschnitt ein Blockieren der Wippe hinsichtlich der Schwenkbarkeit bewirkbar ist und (c) in dem Sägeabschnitt derart ausgebildet ist, dass durch ein Vorliegen des Kulissensteins in dem Sägeabschnitt die Schwenkbarkeit der Wippe und damit die Eintauchbarkeit des Kreissägeblatts bereitstellbar ist.

Der Kulissenstein kann insbesondere nur in den Blockierabschnitt gelangen, wenn der Deckel das Einlegefach öffnet, oder in anderen Worten: wenn der Deckel das Einlegefach nicht verschliesst. Abermals anders ausgedrückt kann das Einlegefach durch Schwenken des Deckels nur geöffnet werden, wenn der Kulissenstein in den Blockierabschnitt gelangt.

Die Kulissenbahn weist insbesondere einen Führungsabschnitt auf, der den Sägeabschnitt und einen Zufuhrabschnitt umfasst, wobei die Kulissenbahn in dem Zufuhrabschnitt derart ausgebildet ist, dass die Schwenkbarkeit der Wippe und damit eine Zufuhr des Einlegefachs hin zum Kreissägeblatt ermöglicht wird.

Der Kulissenstein kann insbesondere nur in den Führungsabschnitt gelangen, wenn der Deckel das Einlegefach nicht öffnet, oder in anderen Worten: wenn der Deckel das Einlegefach verschliesst. Abermals anders ausgedrückt kann eine Zufuhr des Einlegefachs hin zum Kreissägeblatt durch Schwenken der Wippe nur erfolgen, wenn der Deckel geschlossen ist.

Der Kulissenstein liegt insbesondere im Blockierabschnitt vor, solange der Deckel das Einlegefach nicht verschliesst.

Das erste Element ist in einer Ausführungsform als der Kulissenstein ausgeführt und exzentrisch zur Deckelachse am Deckel angeordnet.

Insbesondere verläuft die Kulissenbahn im Sägeabschnitt, insbesondere auch im Führungsabschnitt, zur Ermöglichung der Schwenkbarkeit der Wippe entlang einer Kreisbahn, deren Mittelpunkt auf der Wippachse liegt.

In einer Ausführungsform verlässt die Kulissenbahn im Blockierabschnitt zum Öffnen des Einlegefachs den Verlauf entlang der Kreisbahn.

In einer Ausführungsform erfolgt ein Übergang zwischen dem Blockierabschnitt und dem Führungsabschnitt, bzw. zwischen dem Blockierabschnitt und dem Zufuhrabschnitt, bzw. zwischen dem Blockierabschnitt und dem Sägeabschnitt, fliessend, wobei - betrachtet vom Führungsabschnitt, Zufuhrabschnitt, bzw. Sägeabschnitt in Richtung des Blockierabschnitts - die Kulissenbahn ihren Verlauf entlang der Kreisbahn allmählich verlässt, insbesondere in einer Form ähnlich eines Hockeyschlägerkopfes bzw. schneckenförmig.

Das Einlegefach und/oder der Deckel weisen insbesondere ein Lagesicherungsmittel gegen ein Verdrehen und/oder Verrutschen des Sägeguts aufweist. Beispiele für solche Lagesicherungsmittel sind Dornen, Spikes, Stachel, Zähne, Messer, Flachmeissel und andere relativ spitz strukturierte Elemente. Es können auch Lagesicherungselemente in den Federelementen eingebaut bzw. an deren Oberflächen, die üblicherweise das Sägegut berühren, angeordnet bzw. eingearbeitet sein.

Das Einlegefach oder der Deckel können mindestens ein Federelement zum durch Verschliessen des Einlegefachs erreichtes Einspannen des Sägeguts in dem Einlegefach aufweisen.

Das Einlegefach und der Deckel sind dann insbesondere in ihren Dimensionen und das mindestens eine Federelement in seiner Dimension und Steifigkeit derart ausgebildet und aufeinander abgestimmt, dass das Sägegut beim Verschliessen des Einlegefachs eingespannt wird.

Das erste und zweite Element sind insbesondere derart aufeinander abgestimmt, dass die Einspannung bei einem Schwenken der Wippe erhalten bleibt.

Das mindestens eine Federelement ist insbesondere, betrachtet in einer zur Wippachse parallelen Richtung, relativ zum Kreissägeblatt versetzt angeordnet, sodass das Federelement und das Kreissägeblatt stets kontaktlos vorliegen.

Das Lagesicherungsmittel ist insbesondere am Deckel und das Federelement am Einlegefach angeordnet, oder wobei das Lagesicherungsmittel am Einlegefach und das Federelement am Deckel angeordnet sind, und wobei jedenfalls durch Verschliessen des Einlegefachs das Sägegut zwischen dem Lagesicherungsmittel und dem Federelement eingespannt wird.

Die Sägevorrichtung weist insbesondere n Schlitze und m Kreissägeblätter auf, wobei die n Schlitze und die m Kreissägeblätter derart ausgebildet sind, dass die m Kreissägeblätter bei einem Schwenken der Wippe in zumindest einen Teil der n Schlitze eintauchen, wobei n und m jeweils zwischen 1 und 40 wählbar sind, insbesondere wobei n gleich 11 oder 20 ist und m kleiner oder gleich n ist.

Die Sägevorrichtung ist insbesondere zum Sägen von gefrorenem Schweinefleisch, Kalbfleisch und/oder Rindfleisch als Sägegut vorgesehen, insbesondere von Teilen von Schweinshaxen und/oder Kalbshaxen.

Die Sägevorrichtung weist in einer Ausführungsform einen Haltegriff auf, der starr mit dem Deckel verbunden ist und anhand dessen der Deckel händisch schwenkbar ist. Insbesondere ist der Haltegriff auch gleichzeitig dazu vorgesehen, die Wippe bei geschlossenem Einlegefach zu schwenken und das Sägegut somit dem Sägeelement zuzuführen.

Mit einer erfindungsgemässen Sägevorrichtung kommt der Benutzer beim Sägevorgang nicht in Kontakt mit dem Sägegut. Insbesondere ist es durch den erfindungsgemässen Mechanismus ausgeschlossen, dass der Benutzer in die Sägeelemente greift. Generell muss der Benutzer, bis auf den Einlegevorgang des Sägeguts in das Einlegefach, das etwaig gefrorene Sägegut nicht handhaben und kann somit Verletzungen durch Erfrierungen vermeiden. Insbesondere durch ein Sägeelement mit mehreren Sägeblättern wird die Produktivität des Sägevorgangs erhöht. Zudem ist eine genaue Portionierung gewährleistet, wodurch die Produktqualität gesteigert wird.

Weitere Vorteile der vorliegenden Erfindung sind aus der detaillierten Beschreibung und den Zeichnungen ersichtlich.
Figur 1 ist eine perspektivische Ansicht einer Sägevorrichtung gemäss einer Ausführungsform der vorliegenden Erfindung;
Figur 2 zeigt eine schematische Ansicht der Kulissenführung der Sägevorrichtung aus Figur 1;
Figur 3 ist eine perspektivische Ansicht der Sägevorrichtung aus Figur 1, wobei die Wippe und das Sägeelement entnommen sind;
Figuren 4 und 5 zeigen zwei Ausführungsformen einer Wippe einer erfindungsgemässen Sägevorrichtung;
Figuren 6 bis 9 zeigen Ausführungsformen eines Sägeelementes einer erfindungsgemässen Sägevorrichtung;
Figuren 10 bis 17 illustrieren einen Vorgang, der ein Schliessen des Einlegefachs mit dem Deckel, eine Zuführung des Sägeguts zum Sägeelement sowie einen Sägevorgang umfasst;

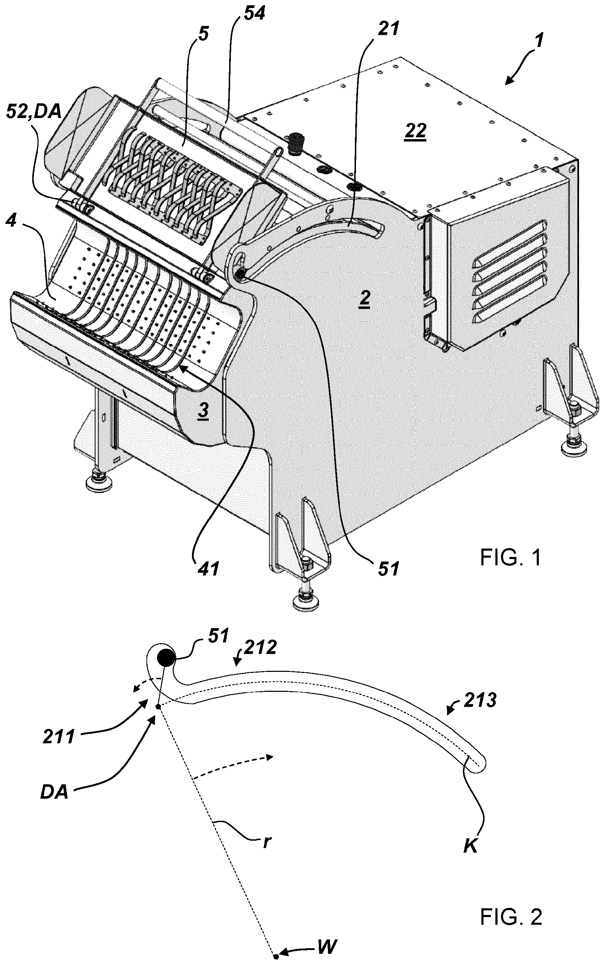

Figur 1 zeigt Ausführungsbeispiel einer Sägevorrichtung gemäss der vorliegenden Erfindung. Gattungsgemäss handelt es sich bei dem zu sägenden Sägegut um gefrorenes Schweinefleisch, Kalbfleisch und/oder Rindfleisch, insbesondere Teile von Schweinshaxen und/oder Kalbshaxen sowie auch Knochen.

Die Sägevorrichtung 1 weist ein Gehäuse 2 auf, in welchem ein Sägeelement mit mindestens einem Kreissägeblatt durch einen Motor drehbar gelagert ist. Der Motor kann etwa im Gehäuseabteil 22 untergebracht sein. Eine Wippe 3 ist schwenkbar um eine Wippachse in dem Gehäuse gelagert und weist ein Einlegefach 4 auf, welches durch den Deckel 5 verschlossen und geöffnet werden kann. Das Sägegut wird für den Sägevorgang in das Einlegefach 4 eingelegt. Der Deckel 5 ist an der Wippe 3 - etwa wie hier gezeigt mit einem Scharniergelenk 52 - gelagert, sodass er zum Öffnen und Schliessen des Einlegefachs 4 um eine Deckelachse DA schwenkbar ist. Insbesondere ist der Deckel mit einem Haltegriff 54 versehen, der starr mit dem Deckel verbunden ist und anhand dessen der Deckel händisch schwenkbar ist. Der Griff 54 kann dann im Anschluss auch dazu verwendet werden, die Wippe zu schwenken, d.h. mit durch den Deckel verschlossenem Einlegefach.

An seinem Boden, d.h. an der dem geschlossenen Deckel 5 gegenüberliegenden Innenseite des Einlegefachs 4, weist das Einlegefach 4 Schlitze auf, durch welche in einem Sägevorgang die Sägeblätter zu dem Schneidgut gelangen können. In der in Figur 1 gezeigten Stellung des Deckels 5 ist die Wippe zwar blockiert, aber die Schwenkbarkeit der Wippe (die bei geschlossenem Deckel gegeben ist) ermöglicht das Eintauchen der Sägeblätter in das Einlegefach, wodurch das Sägeelement also das Sägegut erreicht.

Das besagte Blockieren wird durch eine Kulissenführung ermöglicht, die im gezeigten Ausführungsbeispiel durch einen Kulissenstein 51 am Deckel und eine Kulissenbahn 21 am Gehäuse 2 gebildet wird. Umsetzbar wäre auch eine Kulissenführung, die durch einen Kulissenstein am Gehäuse und eine Kulissenbahn am Deckel gebildet wird. Ebenfalls muss die gezeigte Kulissenbahn 21 nicht unbedingt in die Seitenwand des Gehäuses 2 eingearbeitet sein, sondern könnte etwa auch durch ein Zusatzelement bereitgestellt werden, welches am Gehäuse 2 befestigt wird.

Die Kulissenbahn 21 weist einen Blockierabschnitt zum Blockieren der Wippe hinsichtlich einer Zuführbarkeit des Sägeguts bzw. des Einlegefachs 4 zum Sägeelement auf. Der Kulissenstein 51 kann in diesen Blockierabschnitt nur gelangen, wenn der Deckel 5 das Einlegefach 4 öffnet, d.h. so wie in Figur 1 dargestellt.

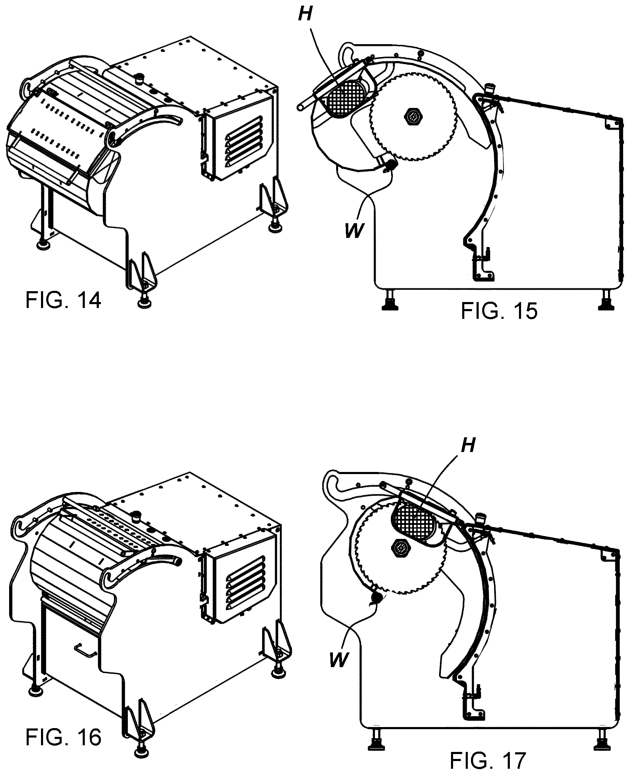

Zum Zulassen der Schwenkbarkeit der Wippe weist die Kulissenbahn 21 weiterhin einen Sägeabschnitt auf, in welchen der Kulissenstein 51 nur gelangen kann, wenn der Deckel 5 das Einlegefach 4 verschliesst (siehe auch Figuren 14-17).

Zumindest im Sägeabschnitt, insbesondere auch in einem sich zwischen dem Säge- und dem Blockierabschnitt befindlichen Zufuhrabschnitt, verläuft die Kulissenbahn 21 entlang einer Kreisbahn, deren Mittelpunkt auf der Wippachse liegt. Der Sägeabschnitt und der Zufuhrabschnitt bilden ggf. gemeinsam einen Führungsabschnitt, wobei die Schwenkbarkeit der Wippe gegeben ist, solange der Kulissenstein 51 in dem Führungsabschnitt vorliegt. Der Zufuhrabschnitt ist insofern optional, als dass nach Schliessen des Deckels 5, d.h. nach Überwindung des Blockierabschnitts, der Kulissenstein 51 sogleich in den Sägeabschnitt gelangen könnte und das Sägegut so unmittelbar der Säge zugeführt würde.

In dem gezeigten Beispiel kann nun der Kulissenstein 51 diese Kreisbahn deshalb verlassen, weil er exzentrisch um die Deckelachse DA ausschwenkbar ist. Der Kulissenstein 51 befindet sich hier am Deckel 5 und gelangt nur dann auf die Kreisbahn, wenn der Deckel 5 das Einlegefach 4 schliesst. Sobald der Deckel 5 auch nur im Geringsten öffnet - und jenes Öffnen ist überhaupt erst möglich, wenn der Kulissenstein 51 in einer Position ist, von welcher er in den Blockierabschnitt gelangen kann - ist eine Zufuhr des Sägeguts zu den Sägeblättern ausgeschlossen, da die Schwenkbarkeit der Wippe 3 blockiert ist.

Die Skizze in Figur 2 fasst dieses Wirkprinzip nochmals zusammen. Der am Deckel angeordnete Kulissenstein 51 ist um die Deckelachse DA schwenkbar. Die Deckelachse DA selbst ist allerdings nur um die Wippachse W entlang der Kreisbahn K schwenkbar. Die jeweiligen gestrichelten Pfeile zeigen die Schwenkbarkeiten. Im gezeigten Zustand, der auch demjenigen in Figur 1 entspricht, befindet sich der Kulissenstein 51 in dem Blockierabschnitt 211 bzw. liegt dort vor. In dem Blockierabschnitt 211 ist die Kulissenbahn 21 so geformt, dass sie, insbesondere in einem gleitenden Übergang, die Kreisbahn K verlässt. Um in den Zufuhrabschnitt 212 bzw. Sägeabschnitt 213 zu gelangen, muss der Kulissenstein 51 den Blockierabschnitt 211 verlassen, was nur möglich ist, wenn der Deckel schliesst. Bei geschlossenem Deckel befindet sich der Kulissenstein 51 auf der Kreisbahn K, die durch einen konstanten Radius r um die Wippachse W definiert ist. Die relative Anordnung und Dimensionierung von Kulissenstein und Kulissenbahn ist derart abgestimmt, dass beim Schwenken der Wippe, d.h. beim Zuführen und Sägen, der Deckel stets geschlossen bleibt und nicht geöffnet werden kann.

Die Kulissenbahn 21 ist in Figur 1 als in die Seitenwand eingearbeitet abgebildet; sie kann allerdings auch als separates Schienenelement an dem Gehäuse montiert werden, was ein Austauschen bzw. eine Wartung erleichtern kann. Ebenso kann der Kulissenstein 51 am Deckel reversibel anmontiert sein oder etwa direkt in den Deckel eingearbeitet sein. Eine weitere Möglichkeit, die Erfindung auszuführen ist - unabhängig davon ob der Kulissenstein am Deckel oder am Gehäuse angeordnet ist bzw. ob die Kulissenbahn am Deckel oder am Gehäuse angeordnet ist - das Bereitstellen einer als Schiene oder Stange ausgeführten Kulissenbahn, wobei der Kulissenstein dann dazu ausgebildet ist, diese Schiene oder Stange zu umgreifen bzw. zu umgeben. Beispielsweise könnte die in den Figuren gezeigte geschwungene Kulissenbahn keine Aussparung in der Seitenwand des Gehäuses sein, sondern eine ebenso geformte Stange. Dabei könnte, wo der Zapfen 51 gezeigt ist, stattdessen eine Gabel am Deckel montiert sein, die die als Stange ausgeführte Kulissenbahn umgreift. Mit dem gleichen Mechanismus wie in den Figuren gezeigt könnte dann die Gabel entlang der Stange gleiten und dieselben Blockier- und Führungsfunktionen bereitstellen, ganz im Sinne der erfindungsgemässen Kulissenführung.

Die Erfindung umfasst auch die Möglichkeit, dass - im Gegensatz zu den anhand der Figuren gezeigten Ausführungsbeispielen - die Kulissenbahn am Deckel angebracht bzw. eingearbeitet ist (d.h. unabhängig davon, ob die Kulissenbahn als eine Aussparung / Nut / Rahmen, wie in den Figuren, ausgebildet ist, oder als Stange / Schiene). Dementsprechend würde dann das Gehäuse einen Kulissenstein aufweisen, der passend zur gewählten Kulissenbahn dann etwa als Zapfen oder Gabel ausgeführt ist. Generell muss natürlich die Länge der Kulissenbahn so gewählt werden, dass die benötigte Schwenkbarkeit der Wippe gegeben ist. Bei geschlossenem Deckel würde dann der Führungsabschnitt bzw. zumindest der Sägeabschnitt der Kulissenbahn entlang der Kreisbahn K verlaufen, die die Wippachse W als Mittelpunkt hat.

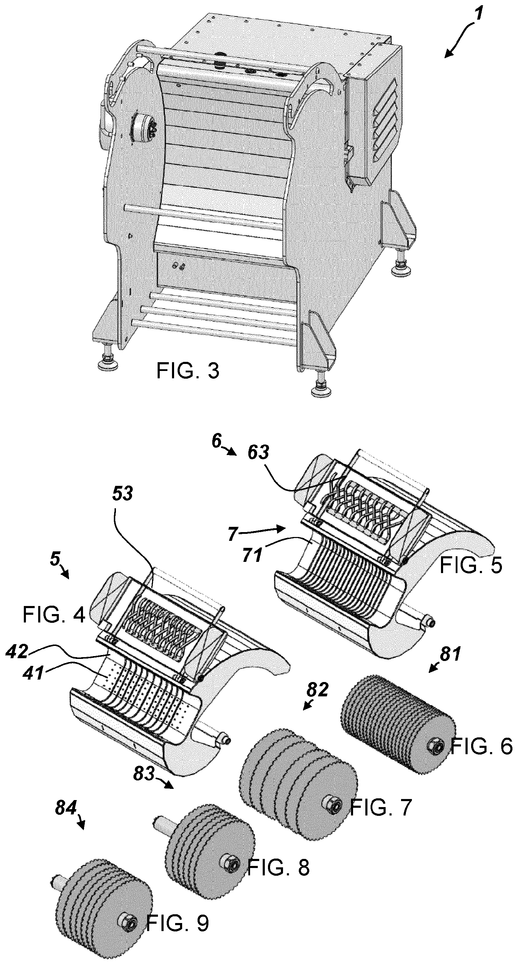

Zurück zum bevorzugten Ausführungsbeispiel: Figur 3 zeigt die Sägevorrichtung 1 mit entferntem Sägeelement und entfernter Wippe. In einer Ausführungsform sind diese Bauteile zum einfachen Säubern leicht entfernbar und wiedereinsetzbar ausgebildet. Insbesondere sind verschiedene Sägeelemente und Wippen modular einsetzbar. Die Figuren 4 bis 9 zeigen einige Beispiele.

Die Wippen 5 und 6 aus den Figuren 4 bzw. 5 zeigen beispielhafte Ausführungen. Die Wippe 5, die bereits aus Figur 1 bekannt ist, ist bevorzugt zum Sägen von Haxen geeignet und hat zwei jeweils als Blattfederspange ausgebildete Federelemente 53 auf. Das Einlegefach 4 weist elf Schlitze 41 und als eine Menge von Dornen ausgebildete Lagesicherungsmittel 42 auf. Die Dornen verhindern ein Verdrehen bzw. ein Verrutschen des Sägeguts beim Sägen. Dieser positive Effekt ist besonders dadurch verstärkt, dass das Sägegut zwischen den Blattfedern und den Dornen eingespannt wird, wenn der Deckel geschlossen wird. Dafür sind insbesondere das Einlegefach und der Deckel in ihren Dimensionen und das mindestens eine Federelement in seiner Dimension und Steifigkeit so aufeinander abgestimmt, dass ein Sägegut von erwarteter Grösse stets zu einem Mindestmass eingeklemmt wird. Diese zum vollständigen Schliessen des Deckels benötigte Spannkraft bleibt dann beim Schwenken der Wippe (Kulissenstein im Führungs- bzw. Sägeabschnitt) erhalten, weil der Kulissenstein "gezwungen" wird auf der Kreisbahn K zu bleiben.

Die Federelemente sind, betrachtet in einer zur Wippachse parallelen Richtung, relativ zu den Schlitzen (und den darin eintauchbaren Kreissägeblättern) versetzt angeordnet ist, sodass die Federelemente und die Kreissägeblätter stets kontaktlos vorliegen.

Die Federelemente 63 der Wippe 6, welche sich bevorzugt zum Sägen von Knochen eignet, haben weniger Blattfedern und sind dadurch steifer ausgebildet. Die Wippe 6 hat weiterhin zwanzig Schlitze 71, da die Knochen in kleinere Stücke gesägt werden sollen. Die zwanzigblättrige Säge 81 aus Figur 6 ist also beispielsweise hiermit einsetzbar.

Das Sägeelement 82 eignet sich bestens für das Sägen von Schweinshaxen und kann beispielsweise mit der Wippe 5 eingesetzt werden. Die Sägeelemente 83 und 84 sind ebenfalls mit der Wippe 5 kompatibel und eignen sich bevorzugt zum Sägen von vorderen bzw. hinteren Kalbshaxen. Die Sägeelemente sind insbesondere auf vorgefertigten Wellen angeordnet, wodurch die Sägevorrichtung auf ein bestimmtes Sägeelement je nach Anwendungsfall modular umgerüstet werden kann.

Natürlich können die Federelemente auch im Einlegefach bzw. die Lagesicherungsmittel am Deckel vorgesehen sein.

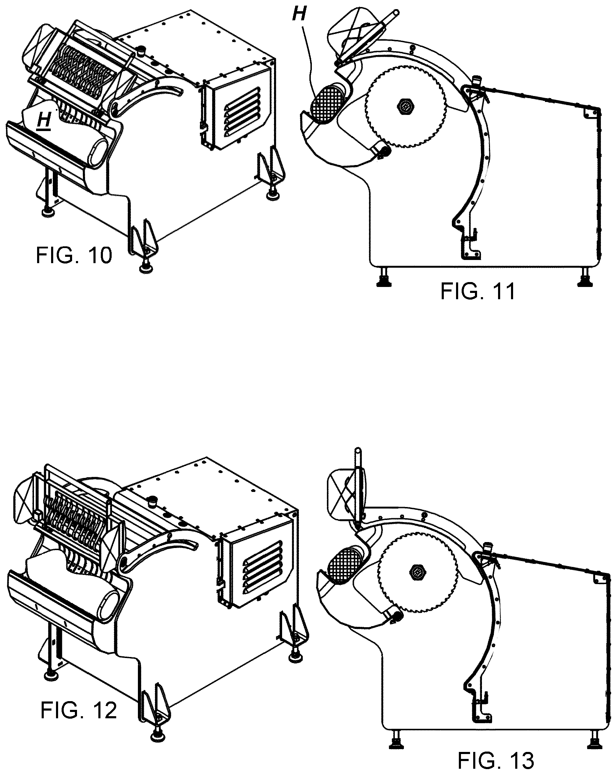

Die Figuren 10 bis 17 illustrieren einen Schliess-, Zufuhr- und Sägevorgang exemplarisch in vier Schritten, wobei jeder Schritt in einer 3D- und einer Seitenschnittansicht dargestellt ist.

In den Figuren 10 bis 13 ist die Schwenkbarkeit der Wippe blockiert, da der Deckel geöffnet ist und sich der Kulissenstein somit in dem Blockierabschnitt der Kulissenbahn befindet. Ein exemplarisches Sägegut H ist in das Einlegefach eingelegt. Wird der Deckel geschlossen, so gleitet der Kulissenstein innerhalb des Blockierabschnitts der Kulissenbahn in Richtung des Führungsabschnitts und nähert sich so allmählich der Kreisbahn und erreicht diese, wenn der Deckel geschlossen ist.

Dabei wird, wie Figur 15 zeigt, das Sägegut H zwischen der Deckelunterseite und dem Boden des Einlegefachs eingeklemmt. Die Federelemente spannen das Sägegut H zusammen mit den Lagesicherungsmitteln fest. Der Griff 54 des Deckels wurde verwendet, um den Deckel zu schliessen, und kann nun gleich im Anschluss dazu verwendet werden, die Wippe zu schwenken um somit das Sägegut dem Sägeelement zuzuführen. Die Figuren 14 und 15 zeigen die Wippe in einer Zuführposition, d.h. einerseits kann der Deckel schon nicht mehr geöffnet werden, weil der Kulissenstein sich im Zuführabschnitt befindet, und andererseits sind die Sägeblätter noch nicht in die Schlitze bzw. das Sägegut eingetaucht. Es ist ein wesentlicher Sicherheitsaspekt der Erfindung, dass sich der Deckel nun nicht mehr öffnen lässt.

Die Figuren 16 und 17 zeigen die Sägeposition, d.h. die Wippe ist voll eingeschwenkt und die Sägeblätter sind komplett durch das Sägegut gelangt. Die Drehrichtung der Sägewelle ist insbesondere so gewählt, dass das Sägegut im Gegenlauf durchsägt wird, d.h. übertragen auf die Figuren 10 bis 17 im mathematisch positiven Drehsinn und entgegen der Zuführrichtung, die auch in Figur 2 gezeigt worden ist.

Es versteht sich, dass diese dargestellten Figuren nur mögliche Ausführungsbeispiele schematisch darstellen.

## Patentansprüche

1. Sägevorrichtung (1) zum Sägen eines Sägeguts (H), das Fleisch und/oder Knochen tierischen Ursprungs aufweist und insbesondere gefroren ist, aufweisend
- ein Gehäuse (2),
- ein Sägeelement (81,82,83,84) und
- einen Motor (22) zum Antreiben des Sägeelements,
- mindestens ein Kreissägeblatt als Sägeelement,
- eine Wippe (3), die schwenkbar um eine Wippachse (WA) in dem Gehäuse gelagert ist, dadurch gezeichnet dass die Wippe ein Einlegefach (4) zum Einlegen des Sägeguts und einen Deckel (5) aufweist, der zum Öffnen und Verschliessen des Einlegefachs schwenkbar um eine Deckelachse an der Wippe gelagert ist,
wobei das Einlegefach mindestens einen Schlitz (41,71) aufweist, der so angeordnet und ausgebildet ist, dass das Kreissägeblatt zum Sägen des Sägeguts mittels der Schwenkbarkeit der Wippe durch den Schlitz in das Einlegefach eintauchbar ist,
und wobei die Sägevorrichtung -mindestens eine Kulissenführung aufweist, die durch ein erstes Element am Deckel und ein zweites Element am Gehäuse gebildet wird,
wobei das erste oder zweite Element als eine Kulissenbahn (21) und das respektive andere Element als ein Kulissenstein (51) ausgeführt ist, wobei die Kulissenbahn:
o einen Blockierabschnitt (211) und einen Sägeabschnitt (213) aufweist,
o in dem Blockierabschnitt derart ausgebildet ist, dass durch ein Vorliegen des Kulissensteins in dem Blockierabschnitt ein Blockieren der Wippe hinsichtlich der Schwenkbarkeit bewirkbar ist und
o in dem Sägeabschnitt derart ausgebildet ist, dass durch ein Vorliegen des Kulissensteins in dem Sägeabschnitt die Schwenkbarkeit der Wippe und damit die Eintauchbarkeit des Kreissägeblatts bereitstellbar ist.

2. Die Sägevorrichtung (1) gemäss Anspruch 1, wobei die Kulissenbahn:
o einen Führungsabschnitt aufweist, der den Sägeabschnitt (213) und einen Zufuhrabschnitt (212) umfasst, und
o in dem Zufuhrabschnitt derart ausgebildet ist, dass die Schwenkbarkeit der Wippe (3) und damit eine Zufuhr des Einlegefachs (4) hin zum Kreissägeblatt ermöglicht wird.

3. Die Sägevorrichtung (1) gemäss einem der vorherigen Ansprüche, wobei der Kulissenstein (51) im Blockierabschnitt (211) vorliegt, solange der Deckel (5) das Einlegefach (4) nicht verschliesst.

4. Die Sägevorrichtung (1) gemäss einem der vorherigen Ansprüche, wobei das erste Element der Kulissenstein (51) ist und exzentrisch zur Deckelachse (DA) am Deckel (5) angeordnet ist.

5. Die Sägevorrichtung (1) gemäss einem der vorherigen Ansprüche, wobei die Kulissenbahn (21) im Sägeabschnitt (213), insbesondere auch im Führungsabschnitt (212), zur Ermöglichung der Schwenkbarkeit der Wippe (3) entlang einer Kreisbahn (K) verläuft, deren Mittelpunkt auf der Wippachse (WA) liegt.

6. Die Sägevorrichtung (1) gemäss Anspruch 5, wobei die Kulissenbahn (21) im Blockierabschnitt (211) zum Öffnen des Einlegefachs (4) den Verlauf entlang der Kreisbahn (K) verlässt.

7. Die Sägevorrichtung (1) gemäss einem der vorherigen Ansprüche, wobei das Einlegefach (4) und/oder der Deckel (5) ein Lagesicherungsmittel (42) gegen ein Verdrehen und/oder Verrutschen des Sägeguts (H) aufweist.

8. Die Sägevorrichtung (1) gemäss einem der vorherigen Ansprüche, wobei das Einlegefach (4) oder der Deckel (5) mindestens ein Federelement (53,63) zum durch Verschliessen des Einlegefachs erreichtes Einspannen des Sägeguts (H) in dem Einlegefach aufweist.

9. Die Sägevorrichtung (1) gemäss Anspruch 8, wobei das Einlegefach (4) und der Deckel (5) in ihren Dimensionen und das mindestens eine Federelement (53,63) in seiner Dimension und Steifigkeit derart ausgebildet und aufeinander abgestimmt sind, dass das Sägegut (H) beim Verschliessen des Einlegefachs (4) eingespannt wird.

10. Die Sägevorrichtung (1) gemäss einem der Ansprüche 8 und 9, wobei das erste und zweite Element derart aufeinander abgestimmt sind, dass die Einspannung bei einem Schwenken der Wippe (3) erhalten bleibt.

11. Die Sägevorrichtung (1) gemäss einem der Ansprüche 8 bis 10, wobei das mindestens eine Federelement (53,63), betrachtet in einer zur Wippachse (WA) parallelen Richtung, relativ zum Kreissägeblatt versetzt angeordnet ist, sodass das Federelement und das Kreissägeblatt stets kontaktlos vorliegen.

12. Die Sägevorrichtung (1) gemäss Anspruch 7 und einem der Ansprüche 8 bis 11, wobei das Lagesicherungsmittel (42) am Deckel (5) und das Federelement (52,62) am Einlegefach (4) angeordnet sind, oder wobei das Lagesicherungsmittel am Einlegefach und das Federelement am Deckel angeordnet sind, und wobei jedenfalls durch Verschliessen des Einlegefachs das Sägegut (H) zwischen dem Lagesicherungsmittel und dem Federelement eingespannt wird.

13. Die Sägevorrichtung (1) gemäss einem der vorherigen Ansprüche, aufweisend *n* Schlitze (41,71) und *m* Kreissägeblätter, wobei die *n* Schlitze und die *m* Kreissägeblätter derart ausgebildet sind, dass die *m* Kreissägeblätter bei einem Schwenken der Wippe (3) in zumindest einen Teil der *n* Schlitze eintauchen, wobei *n* und *m* jeweils zwischen 1 und 40 wählbar sind, insbesondere wobei *n* gleich 11 oder 20 ist und *m* kleiner oder gleich *n* ist.

14. Die Sägevorrichtung (1) gemäss einem der vorherigen Ansprüche, wobei die Sägevorrichtung zum Sägen eines Sägeguts (H) vorgesehen ist, welches gefrorenes Schweinefleisch, Kalbfleisch und/oder Rindfleisch ist, insbesondere Teile von Schweinshaxen und/oder Kalbshaxen.

15. Die Sägevorrichtung (1) gemäss einem der vorherigen Ansprüche, mit einem Haltegriff (54), der starr mit dem Deckel (5) verbunden ist und anhand dessen der Deckel händisch schwenkbar ist.

## Claims

1. Sawing device (1) for sawing a material (H) to be sawn, having meat and/or bones of animal origin, and in particular being frozen, comprising
- a housing (2),
- a sawing element (81, 82, 83, 84) and
- a motor (22) for driving the sawing element,
- at least one circular saw blade as a sawing element,
- a rocker (3) which is pivotably mounted in the housing about a rocker axis (WA), **characterized in that** the rocker has an insertion compartment (4) for inserting the material to be sawn and a cover (5) which is mounted on the rocker such that it can be pivoted about a cover axis in order to open and close the insertion compartment, wherein the insertion compartment comprises at least one slot (41, 71) which is arranged and formed in such a manner that the circular saw blade for sawing the material to be sawn can be plunged through the slot into the insertion compartment by means of the pivotability of the rocker,
and wherein the sawing device has at least one slide guide which is formed by a first element on the cover and a second element on the housing,
wherein the first or second element is designed as a sliding track (21) and the respective other element is designed as a sliding block (51), wherein the sliding track:
∘ has a blocking section (211) and a sawing section (213),
∘ is formed in the blocking section in such a way that a blocking of the rocker with respect to the pivotability can be effected by a presence of the sliding block in the blocking section, and
∘ is formed in the sawing section in such a way that the pivotability of the rocker and thus the plungability of the circular saw blade can be provided by the presence of the sliding block in the sawing section.

2. The sawing device (1) according to claim 1, wherein the sliding track:
∘ has a guide section comprising the sawing section (213) and a feed section (212), and
∘ is formed in the feed section in such a way that the pivotability of the rocker (3) and thus the feed of the insertion compartment (4) towards the circular saw blade is enabled.

3. The sawing device (1) according to one of the preceding claims, wherein the sliding block (51) is present in the blocking section (211) as long as the cover (5) does not close the insertion compartment (4).

4. The sawing device (1) according to one of the preceding claims, wherein the first element is the sliding block (51) and is arranged eccentrically to the cover axis (DA) on the cover (5).

5. The sawing device (1) according to one of the preceding claims, wherein the sliding track (21) in the sawing section (213), in particular also in the guide section (212), extends along a circular path (K), the center of which lies on the rocker axis (WA), to enable the pivotability of the rocker (3).

6. The sawing device (1) according to claim 5, wherein the sliding track (21) leaves the course along the circular path (K) in the blocking section (211) for opening the insertion compartment (4).

7. The sawing device (1) according to one of the preceding claims, wherein the insertion compartment (4) and/or the cover (5) comprises a position-securing means (42) against twisting and/or slipping of the material (H) to be sawn.

8. The sawing device (1) according to one of the preceding claims, wherein the insertion compartment (4) or the cover (5) comprises at least one spring element (53, 63) for clamping the material (H) to be sawn in the insertion compartment achieved by closing the insertion compartment.

9. The sawing device (1) according to claim 8, wherein the insertion compartment (4) and the cover (5) are designed and matched to each other in their dimensions and the at least one spring element (53, 63) in its dimension and stiffness in such a way that the material (H) to be sawn is clamped when the insertion compartment (4) is closed.

10. The sawing device (1) according to one of claims 8 and 9, wherein the first and second elements are matched to each other such that the clamping is maintained when the rocker (3) is pivoted.

11. The sawing device (1) according to one of claims 8 to 10, wherein the at least one spring element (53, 63), as viewed in a direction parallel to the rocker axis (WA), is arranged offset relative to the circular saw blade, so that the spring element and the circular saw blade are always present without contact.

12. The sawing device (1) according to claim 7 and one of claims 8 to 11, wherein the position-securing means (42) is arranged on the cover (5) and the spring element (52, 62) is arranged on the insertion compartment (4), or wherein the position-securing means is arranged on the insertion compartment and the spring element is arranged on the cover, and wherein, in any case, by closing the insertion compartment, the material (H) to be sawn is clamped between the position-securing means and the spring element.

13. The sawing device (1) according to one of the preceding claims, comprising *n* slots (41, 71) and *m* circular saw blades, wherein the *n* slots and the *m* circular saw blades are formed in such a way that the *m* circular saw blades plunge into at least a part of the *n* slots when the rocker (3) is pivoted, wherein *n* and *m* are each selectable between 1 and 40, in particular wherein *n* is equal to 11 or 20 and *m* is smaller than or equal to *n.*

14. The sawing device (1) according to one of the preceding claims, wherein the sawing device is provided for sawing a material (H) to be sawn, which is frozen pork, veal and/or beef, in particular parts of pork shanks and/or veal shanks.

15. The sawing device (1) according to one of the preceding claims, having a holding handle (54) which is rigidly connected to the cover (5) and by means of which the cover can be pivoted manually.

## Revendications

1. Dispositif de sciage (1) pour scier un produit à scier (H) qui présente de la viande et/ou des os d'origine animale et qui est en particulier congelé, présentant
- un boîtier (2),
- un élément de sciage (81, 82, 83, 84) et
- un moteur (22) pour entraîner l'élément de sciage,
- au moins une lame de scie circulaire comme élément de sciage,
- une bascule (3) qui est montée dans le boîtier de manière à pouvoir pivoter autour d'un axe de bascule (WA), **caractérisée en ce que** la bascule présente un compartiment d'insertion (4) pour insérer le produit à scier et un couvercle (5) qui est monté sur la bascule de manière à pouvoir pivoter autour d'un axe de couvercle pour ouvrir et fermer le compartiment d'insertion,
le compartiment d'insertion présentant au moins une fente (41, 71) qui est disposée et configurée de telle sorte que la lame de scie circulaire puisse être plongée dans le compartiment d'insertion pour scier le produit à scier au moyen de la capacité de pivotement de la bascule à travers la fente,
et le dispositif de sciage présentant au moins un guidage à coulisse, qui est formé par un premier élément sur le couvercle et un deuxième élément sur le boîtier,
le premier ou le deuxième élément étant réalisé sous la forme d'une piste à coulisse (21) et l'autre élément respectif sous la forme d'un coulisseau (51), la piste à coulisse :
∘ présentant une section de blocage (211) et une section de sciage (213),
∘ étant configurée dans la section de blocage de telle sorte que, par le coulisseau présent dans la section de blocage, un blocage de la bascule en ce qui concerne la capacité de pivotement peut être provoqué et
∘ étant configurée dans la section de sciage de telle sorte que, par le coulisseau présent dans la section de sciage, la capacité de pivotement de la bascule et donc l'aptitude à la plongée de la lame de scie circulaire peuvent être obtenues.

2. Dispositif de sciage (1) selon la revendication 1, dans lequel la piste à coulisse :
∘ présente une section de guidage comprenant la section de sciage (213) et une section d'alimentation (212), et
∘ est configurée dans la section d'alimentation de manière à permettre le pivotement de la bascule (3) et donc une alimentation du compartiment d'insertion (4) vers la lame de scie circulaire.

3. Dispositif de sciage (1) selon l'une des revendications précédentes, dans lequel le coulisseau (51) est présent dans la section de blocage (211) tant que le couvercle (5) ne ferme pas le compartiment d'insertion (4).

4. Dispositif de sciage (1) selon l'une des revendications précédentes, dans lequel le premier élément est le coulisseau (51) et est disposé sur le couvercle (5) de manière excentrée par rapport à l'axe du couvercle (DA).

5. Dispositif de sciage (1) selon l'une des revendications précédentes, dans lequel la piste à coulisse (21) s'étend dans la section de sciage (213), en particulier aussi dans la section de guidage (212), pour permettre le pivotement de la bascule (3), le long d'une trajectoire circulaire (K) dont le centre est situé sur l'axe de bascule (WA).

6. Dispositif de sciage (1) selon la revendication 5, dans lequel la piste à coulisse (21) quitte le tracé le long de la trajectoire circulaire (K) dans la section de blocage (211) pour ouvrir le compartiment d'insertion (4).

7. Dispositif de sciage (1) selon l'une des revendications précédentes, dans lequel le compartiment d'insertion (4) et/ou le couvercle (5) présente un moyen de blocage en position (42) contre une rotation et/ou un glissement du produit à scier (H).

8. Dispositif de sciage (1) selon l'une des revendications précédentes, dans lequel le compartiment d'insertion (4) ou le couvercle (5) présente au moins un élément de ressort (53, 63) pour le serrage du produit à scier (H) dans le compartiment d'insertion, obtenu par fermeture du compartiment d'insertion.

9. Dispositif de sciage (1) selon la revendication 8, dans lequel le compartiment d'insertion (4) et le couvercle (5) sont configurés et adaptés l'un à l'autre quant à leurs dimensions et l'au moins un élément de ressort (53, 63) quant à ses dimensions et sa raideur de telle sorte que le produit à scier (H) est serré lors de la fermeture du compartiment d'insertion (4).

10. Dispositif de sciage (1) selon l'une des revendications 8 et 9, dans lequel le premier et le deuxième éléments sont adaptés l'un à l'autre de telle sorte que le serrage est maintenu lors d'un pivotement de la bascule (3).

11. Dispositif de sciage (1) selon l'une des revendications 8 à 10, dans lequel l'au moins un élément de ressort (53, 63), considéré dans une direction parallèle à l'axe de bascule (WA), est décalé par rapport à la lame de scie circulaire, de sorte que l'élément de ressort et la lame de scie circulaire sont toujours sans contact.

12. Dispositif de sciage (1) selon la revendication 7 et l'une des revendications 8 à 11, dans lequel le moyen de blocage en position (42) est disposé sur le couvercle (5) et l'élément de ressort (52, 62) sur le compartiment d'insertion (4), ou dans lequel le moyen de blocage en position est disposé sur le compartiment d'insertion et l'élément de ressort sur le couvercle, et dans lequel le produit à scier (H) est serré entre le moyen de blocage en position et l'élément de ressort en tout cas par la fermeture du compartiment d'insertion.

13. Dispositif de sciage (1) selon l'une des revendications précédentes, présentant *n* fentes (41, 71) et *m* lames de scie circulaire, les *n* fentes et les *m* lames de scie circulaire étant configurées de telle sorte que les m lames de scie circulaire plongent dans au moins une partie des *n* fentes lors du pivotement de la bascule (3), *n* et *m* pouvant être sélectionnées respectivement entre 1 et 40, en particulier *n* étant égal à 11 ou 20 et m étant inférieur ou égal à *n.*

14. Dispositif de sciage (1) selon l'une des revendications précédentes, dans lequel le dispositif de sciage est prévu pour scier un produit à scier (H), qui est de la viande de porc, de la viande de veau et/ou de la viande de bœuf congelées, en particulier des parties de jarret de porc et/ou de jarret de veau.

15. Dispositif de sciage (1) selon l'une des revendications précédentes, avec une poignée de maintien (54) qui est reliée de manière rigide au couvercle (5) et à l'aide de laquelle le couvercle peut être pivoté manuellement.
